# EUROPEAN PATENT APPLICATION

(11) **EP 4 311 843 A1**
(43) Date of publication of application: **31.01.2024**
(21) Application number: 23187670.7
(22) Date of filing: 25.07.2023
(51) Int. Cl.: C08K 3/04, B60C 1/00

(54) **RUBBER COMPOSITION AND A TIRE COMPRISING SAID COMPOSITION**

(30) Priority: 27.07.2022 US 202217815246
(71) Applicant: The Goodyear Tire & Rubber Company, Akron, OH 44316 (US)
(72) Inventor: BALAGUER PINO, Adrian Osvaldo, L-2168 Luxembourg (LU); WELTER, Carolin Anna, 54340 Schleich (DE); TAHON, Julia Martine Francoise Claudine, L-7596 Reckange (LU); JOHNSON, Dawn Michelle, Uniontown, 44685 (US)
(74) Representative: Kutsch, Bernd

(57) **Abstract**

A rubber composition (20) is disclosed comprising rubber, a first filler in an amount in the range of from 15 to 70 parts by weight per 100 parts by weight of the rubber, the first filler comprising a carbon-based inorganic compound, wherein the carbon-based inorganic compound comprises interconnected crystalline carbon nanofilaments, and a second filler in an amount in the range of from 5 to 30 phr, the second filler comprising silica. Also, pneumatic tire (1) comprising such a rubber composition (20) is disclosed, preferably as a wire coat rubber composition.

## Description

### Field of the Invention

The present invention relates to a rubber composition. Said rubber composition can be used for coating wires or cords which are used for reinforcing rubber products such as tires. It can be used in tires such as in carcass plies, belt plies, overlay plies, barrier and ply strips, the tires being for example truck tires, semi-trailer tires, bus tires, coach bus tires, light truck tires, car tires, and so on. The present invention further relates to a pneumatic tire comprising said rubber composition.

### Background of the Invention

Tire performance has significantly improved over recent decades. In some cases this improvement is attributable, at least in part, to the use of silica in tire rubber compositions which has resulted in improved rolling resistance (fuel economy) without compromising tire traction or tread wear characteristics. For example, US 2020/0399497 A1 discloses a wire coat rubber composition comprising natural rubber and about 55 phr of a surface oxidized carbon black as a filler. However, there is still significant room for further improvement.

In an effort to further reduce vehicle emissions and to conserve fuel, there continues to be a long felt need to further reduce rolling resistance of tires which are used in a multiple of applications. Such a reduction can be of particular interest for tires of trucks which move heavy loads at relatively constant speed over large distances but also for passenger tires. Reduced rubber hysteresis property for a ply rubber composition is often desired to promote reduced internal heat generation within the ply during tire service and to promote reduced tire rolling resistance of the tire itself leading to reduced vehicular energy expenditure with an accompanying reduction in vehicular fuel consumption (beneficial increase in fuel economy) for the associated vehicle. Predictive beneficially reduced hysteresis for a rubber composition is normally evidenced by at least one of increased rebound physical property and decreased tangent delta (tan delta) physical property for the cured rubber composition.

Therefore, there is a need to provide a new rubber composition which is suitable for reinforcing rubber products such as tires, in particular truck, semi-trailer, bus, coach bus, light truck or passenger (car) tires, said rubber composition exhibiting improved hysteresis, strength and wire coat adhesion, the composition being a wire coat rubber composition. Surprisingly, it was found that the rubber composition according to the present invention achieves these objectives.

### Summary of the Invention

The invention relates to a rubber composition in accordance with claim 1 and to a tire in accordance with claim 14.

Dependent claims refer to preferred embodiments of the invention.

Therefore, in one aspect, the present invention relates to a rubber composition comprising rubber, a first filler in an amount in the range of from 15 to 70 parts by weight per 100 parts by weight of the rubber (phr), the first filler comprising a carbon-based inorganic compound, wherein the carbon-based inorganic compound comprises interconnected crystalline carbon nanofilaments, and a second filler in an amount in the range of from 5 to 30 phr, the second filler comprising silica.

Further, the present invention relates to a ply comprising the rubber composition according to the present invention and metal reinforcing wires embedded in said composition. The ply of the present invention is preferably a carcass ply, a belt ply, a ply strip or an overlay ply.

Furthermore, the present invention relates to a pneumatic tire comprising the rubber composition of the present invention.

### Definitions

In the context of the present invention, the term "consists essentially of X" relative a given composition/compound means that from 98 to 100 weight-%, preferably from 99 to 100 weight-%, more preferably from 99.5 to 100 weight-%, more preferably from 99.9 to 100 weight-%, of said composition/compound consists of X, X being a component. Similarly, the term "essentially free of X" relative to a given composition/compound means that at most 2 weight-%, preferably at most 1 weight-%, more preferably at most 0.5 weight-%, more preferably at most 0.1 weight-%, of said given composition/compound consists of X.

In the context of the present invention, the term "surface treated silica" means that silica has been treated with one or more compounds in order to improve its properties. Such term is well-known by the skilled person in the art.

In the context of the present invention, the term "low PCA oil" means that said oil has a low content of polycyclic aromatic, in particular of no more than 10 mg/kg of oil.

### Brief Description of the Drawings

The invention will be described by way of example and with reference to the accompanying drawings in which:
FIG. 1 is a schematic cross-section of a tire in accordance with the present invention; and
FIG. 2 is a schematic cross-section of a ply, such as a belt ply, a carcass ply, a ply strip or an overlay ply, comprising wires or cords coated with the rubber composition of the present invention.

### Detailed Description of Preferred Embodiments of the Invention

The present invention relates to a rubber composition comprising rubber, a first filler in an amount in the range of from 15 to 70 parts by weight per 100 parts by weight of the rubber (phr), the first filler comprising a carbon-based inorganic compound, wherein the carbon-based inorganic compound comprises interconnected crystalline carbon nanofilaments, and a second filler in an amount in the range of from 5 to 30 phr, the second filler comprising silica.

Preferably, the first filler is a carbon-based inorganic compound, wherein the carbon-based inorganic compound comprises interconnected crystalline carbon nanofilaments.

Preferably, the carbon-based inorganic compound has a pore volume in the range of from 0.5 to 2.0 cm³/g, more preferably in the range of from 0.9 to 1.6 cm³/g, more preferably in the range of from 1.0 to 1.5 cm³/g, more preferably in the range of from 1.1 to 1.4 cm³/g. The pore volume is determined by mercury porosimetry.

Preferably, the first filler has a BET specific surface area in the range of from 20 to 190 m²/g, more preferably in the range of from 30 to 110 m²/g, more preferably in the range of from 35 to 80 m²/g, more preferably in the range of from 40 to 60 m²/g. The BET specific surface area is determined according to ASTM D6556.

Preferably, the density of the first filler, more preferably of the carbon-based inorganic compound, is in the range of from 0.30 to 0.70 g/cm³, more preferably in the range of from 0.40 to 0.60 g/cm³. The density is determined by pour density measurement (ASTM D1513-05).

Preferably, the average filament thickness of the first filler, more preferably of the carbon-based inorganic compound, is in the range of from 15 to 80 nm, more preferably in the range of from 20 to 70 nm. The average filament thickness is determined by SEM tomography.

Preferably, the average filament length of the first filler, more preferably of the carbon-based inorganic compound, is in the range of from 80 to 600 nm, more preferably in the range of from 100 to 500 nm. The average filament length is determined by SEM tomography.

Preferably, the average pore size of the first filler, more preferably of the carbon-based inorganic compound, is in the range of from 10 to 90 nm, more preferably in the range of from 70 to 90 nm. The average pore size is determined by mercury porosimetry.

The first filler can be for example commercially available CarbonX^{®} from CarbonX, such as XR-1, X1, X3, X5 and X7, Carbon X^{®} X5 being the preferred one.

Preferably, the rubber composition of the present invention comprises the first filler in an amount in the range of from 16 to 60 phr, more preferably in the range of from 17 to 57 phr.

Preferably, the silica comprised in the second filler comprises, more preferably is, amorphous silica, more preferably precipitated or surface treated silica. Preferably, the second filler consists essentially of, preferably consists of, silica (precipitated or surface treated silica).

Preferably, the silica comprised in the second filler has a BET specific surface area in the range of from 130 to 250 m²/g, preferably in the range of from 135 to 200 m²/g. The BET specific surface area being determined according to ASTM D6556.

Preferably, the rubber composition of the present invention comprises the second filler, more preferably being silica, in an amount in the range of from 12 to 25 phr.

Preferably, the rubber comprises and more preferably is polyisoprene or cis-1,4-polyisoprene (having a cis-content of at least 90 percent). The rubber can be synthetic or natural. Preferably, the rubber is a natural rubber.

Preferably, the rubber composition further comprises one or more coupling agents, the one or more coupling agents more preferably being selected from the group consisting of a carbon black coupling agent, a silane, a silicon-containing compound, an amine-containing compound, and a mixture of two or more thereof. Preferably, the silicon-containing compound comprises, more preferably is, bis-[3-(triethoxysilylpropyl)]-tetrasulfide. However, one or more silanes may also be chosen from the group of bis-triethoxysilylpropyl polysulfides (including, e.g., TESPT or TESPD) and mercapto silanes, including for instance 3-Octanoylthio-1 -propyltriethoxysilane, also available under the tradename NXT^{™} from Momentive.

Preferably, the rubber composition comprises the one or more coupling agents in a total amount in the range of from 1 to 5 phr, more preferably in the range of from 1.5 to 3 phr. The proportion of carbon black and the silicon-containing compound can preferably be in the range of from 0.5:1 to 2:1, more preferably in the range of from 0.75:1 to 1.25:1. For example, suitable coupling agents are commercially available such as X-50-S^{®} from Evonik or JH-S69C ^{®} from Castle Chemicals.

It is also conceivable, in the context of the present invention, that the one or more coupling agents may have the structural formula: 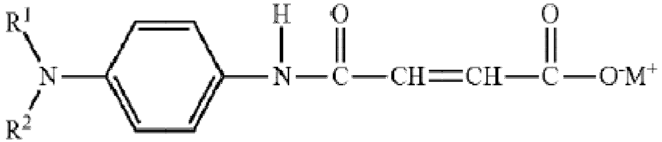 wherein R¹ and R² can be the same or different and represent hydrogen atoms or an alkyl group, alkenyl group or alkynyl group containing from 1 to 20 carbon atoms; and wherein M⁺ represents a sodium, potassium, or lithium ion. Preferably at least one of R¹ and R² will typically represent a hydrogen atom and in many cases both R¹ and R² will represent hydrogen atoms. M⁺ will typically be a sodium ion, a potassium ion, or a lithium ion, with sodium ions normally being preferred. Sodium (2Z)-4-[(aminophenyl)amino]-4-oxo-2-butanoate is a commercially available carbon black coupling agent which is sold by Sumitomo Chemical Co., Ltd. as Sumilink^{®} 200.

Preferably, the rubber composition of the present invention further comprises sulfur, more preferably in an amount in the range of from 4 (or 5) to 10 phr.

Preferably, the rubber composition of the present invention further comprises one or more oils, preferably in a total amount in the range of from 0.5 to 9 phr, or more preferably in a total amount in the range of from 0.5 to 3 phr. Preferably, the one or more oils are selected from the group consisting of a naphtenic oil, an aromatic oil, a paraffinic oil, a vegetable oil, a low polycyclic aromatic (PCA) oil and a mixture of two or more thereof, more preferably selected from the group consisting of a naphtenic oil, a paraffinic oil and a vegetable oil. More preferably, the one or more oils comprises, more preferably is, a naphtenic oil. Examples of low PCA oils are mild extract solvate (MES), treated distillate aromatic extract oil (TDAE) and SRAE. In the context of the present invention, the term "vegetable oil" refers among other to soybean oil, sunflower oil, rapeseed oil, olive oil, and coconut oil. Preferably, in the context of the present invention, vegetable oil refers to soybean oil, sunflower oil and/or rapeseed oil.

Preferably, the rubber composition of the present invention further comprises a processing aid, more preferably in an amount in the range of from 0.2 to 3 phr. Preferably, the processing aid comprises a pyrazolone, more preferably having a melting point of at least 150°C, more preferably at least 200°C, more preferably in the range of from 200 to 250°C, more preferably in the range of from 210 to 230°C. Preferably, the processing aid comprises, more preferably is, 3-methyl-5-pyrazolone.

Preferably, the rubber composition of the present invention is essentially free of, preferably free of, a resin. This is particularly the case when the rubber composition of the present invention is used in tires for trucks and the like.

Alternatively, preferably, the rubber composition of the present invention further comprises one or more resins, more preferably in a total amount in the range of from 1 (preferably 3) to 8 phr, more preferably in the range of from 4 to 7 phr. This is particularly the case when the rubber composition is used for passenger car tires. Preferably, the one or more resins comprised in the rubber composition is selected from the group consisting of an hexamethoxymethylmelamine, a phenolic resin, and a mixture of two or more thereof, more preferably an hexamethoxymethyl-melamine (HMMM) and a phenolic resin. Concrete examples of the resins can be Cyrez^{®} resins from Allnex, Durez^{®} 31459 from Sumitomo and SMD-30207 by SI Group. The weight ratio of hexamethoxymethylmelamine (HMMM) relative to the phenolic resin preferably is in the range of from 1:1 to 4:1, more preferably in the range of from 2:1 to 3:1.

Preferably, the rubber composition of the present invention further comprises zinc oxide. Zinc oxide is more preferably comprised in the rubber composition in an amount in the range of from 5 to 15 phr, more preferably in the range of from 6.5 to 12 phr.

Preferably, the rubber composition of the present invention further comprises one or more antioxidants, more preferably in a total amount in the range of from 1 to 3.5 phr. Preferably, the one or more antioxidants are selected from the group consisting of polymerized trimethyl dihydroquinoline (TMQ), a mixture of aryl-p-phenylene diamines (DTPD AO), and a mixture of two or more thereof, more preferably being polymerized trimethyl dihydroquinoline (TMQ). Suitable commercially available DTPD can be Polystay^{®} 100 from Goodyear Chemicals.

Preferably, the rubber composition of the present invention further comprises one or more antidegradants, more preferably in a total amount in the range of from 0.75 to 3.5 phr. Preferably, the one or more antidegradant is N-(1,3-dimethylbutyl)-N'-phenyl-p-phenylenediamine (6-PPD). Suitable commercially available 6-PPD can be Santoflex^{®} 6PPD from Eastman or Vulkanox^{®} 4020 from Lanxess. Further other antidegradant than 6-PPD can be used, such as a component of the same chemical family as known by the skilled person in the art.

Preferably, the rubber composition of the present invention further comprises one or more cobalt salts, more preferably in a total amount in the range of from 0.1 to 3 phr, more preferably in the range of from 0.25 to 1 phr. Preferably, the one or more cobalt salts are selected from the group consisting of cobalt stearate, cobalt neodecanoate, cobalt boro-neodecanoate and a mixture of two or more thereof, more preferably cobalt stearate.

Preferably, the rubber composition of the present invention further comprises one or more fatty acids, more preferably in a total amount in the range of from 0.1 to 2 phr. Preferably, the one or more fatty acids are selected from the group consisting of stearic acid, palmitic acid, oleic acid, linoleic acid and a mixture of two or more thereof, more preferably selected from the group consisting of stearic acid, palmitic acid, oleic acid and a mixture of two or more thereof. More preferably, the one or more fatty acids comprise, more preferably are, stearic acids or a mixture of stearic acid, palmitic acid, and oleic acid, with the stearic acid being the major component of the mixture.

Typically, accelerators are used to control the time and/or temperature required for vulcanization and to improve the properties of the vulcanizate. Preferably, the rubber composition of the present invention further comprises an accelerator, which is more preferably used in an amount in the range of from 0.3 to 3 phr, more preferably in the range of from 0.5 to 2 phr, more preferably in the range of from 0.6 to 1.5 phr. Preferably, in the context of the present invention, the accelerator is selected from the group consisting of amines, disulfides, guanidines, thioureas, thiazoles, thiurams, sulfenamides, dithiocarbamates and xanthates. More preferably the accelerator is N- tert-butyl-benzothiazole sulfonamide (TBBS). This accelerator is preferably used for the rubber composition in truck tires.

Alternatively, the rubber composition of the present invention further comprises a combination of two accelerators, a first accelerator, preferably being selected from the group consisting of amines, disulfides, guanidines, thioureas, thiazoles, thiurams, sulfenamides, dithiocarbamates and xanthates, and a second accelerator different from the first accelerator, preferably being selected from the group consisting of amines, disulfides, guanidines, thioureas, thiazoles, thiurams, sulfenamides, dithiocarbamates and xanthates. The weight ratio of the first accelerator relative to the second accelerator more preferably is in the range of from 0.5:1 to 1:0.5, more preferably in the range of from 0.75:1 to 1:0.75. The first accelerator is preferably N- tert-butyl-benzothiazole sulfonamide (TBBS). The second accelerator is preferably N,N-Dicyclohexyl -2-benzothiazolesulfonamide (DCBS). This combination of accelerators is preferably used for the rubber composition in passenger car tires. Vulcanization retarders can also be used.

Preferably, the rubber composition of the present invention is a wire coat rubber composition.

Preferably, the rubber composition of the present invention comprises rubber, more preferably natural rubber, a first filler in an amount in the range of from 15 to 70 parts by weight per 100 parts by weight of the rubber, the first filler comprising, more preferably being, a carbon-based inorganic compound, wherein the carbon-based inorganic compound comprises interconnected crystalline carbon nanofilaments, a second filler in an amount in the range of from 5 to 30 phr, the second filler comprising silica, sulfur, more preferably in an amount in the range of from 5 to 10 phr, zinc oxide, more preferably in an amount in the range of from 5 to 15 phr, and optionally a processing aid as defined in the foregoing.

More preferably, the rubber composition of the present invention comprises rubber, more preferably natural rubber, a first filler in an amount in the range of from 15 to 70 parts by weight per 100 parts by weight of the rubber, the first filler comprising, more preferably being, a carbon-based inorganic compound, wherein the carbon-based inorganic compound comprises interconnected crystalline carbon nanofilaments, a second filler in an amount in the range of from 5 to 30 phr, the second filler comprising silica, sulfur, more preferably in an amount in the range of from 5 to 10 phr, zinc oxide, more preferably in an amount in the range of from 5 to 15 phr, one or more cobalt salts, more preferably in an amount in the range of from 0.1 to 3 phr, one or more fatty acids, more preferably in an amount in the range of from 0.1 to 2 phr, and optionally a processing aid as defined in the foregoing.

More preferably, the rubber composition of the present invention comprises rubber, more preferably natural rubber, a first filler in an amount in the range of from 15 to 70 parts by weight per 100 parts by weight of the rubber, the first filler comprising, more preferably being, a carbon-based inorganic compound, wherein the carbon-based inorganic compound comprises interconnected crystalline carbon nanofilaments, a second filler in an amount in the range of from 5 to 30 phr, the second filler comprising silica, sulfur, more preferably in an amount in the range of from 5 to 10 phr, zinc oxide, more preferably in an amount in the range of from 5 to 15 phr, one or more cobalt salts, more preferably in an amount in the range of from 0.1 to 3 phr, one or more fatty acids, more preferably in an amount in the range of from 0.1 to 2 phr, one or more coupling agents as defined in the foregoing, and optionally one or more of a resin as defined in the foregoing, an oil as defined in the foregoing and a processing aid as defined in the foregoing. More preferably, the rubber composition further comprises one or more antioxidants as defined in the foregoing, one or more antidegradants as defined in the foregoing and/or one or more accelerators as defined in the foregoing, more preferably one or more antioxidants as defined in the foregoing, one or more antidegradants as defined in the foregoing and one or more accelerators as defined in the foregoing.

Preferably, the rubber composition of the present invention exhibits a wire adhesion in the range of from 300 to 900 N, more preferably in the range of from 350 to 750 N. The wire adhesion is determined according to ASTM D2229-73.

Preferably, the rubber composition of the present invention exhibits a rebound at 23°C in the range of from 60 to 110%, determined according to according to ASTM D1054 at 23°C, and a tan delta (10%) in the range of from 0.03 to 0.08 determined according to according to ASTM D5289 at 100°C.

The preparation of the rubber composition can be accomplished by methods known to those having skill in the rubber mixing art. For example, the ingredients are typically mixed in at least two stages, namely at least one "non-productive" stage followed by a "productive" mix stage. The final curatives including sulfur-vulcanizing agents are typically mixed in the final stage which is conventionally called the "productive" mix stage in which the mixing typically occurs at a temperature, or ultimate temperature, lower than the mix temperature(s) of the preceding "non-productive" mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermo-mechanical working varies as a function of the operating conditions, and the volume and nature of the components. For example, the thermomechanical working may be from 1 to 20 minutes.

The rubber composition of the present invention may be incorporated in a variety of (rubber) components of a tire. For example, the component can be a belt ply, carcass ply, ply strip or an overlay ply. It is emphasized that not all components in a tire need to include the rubber composition in accordance with the invention. In particular, it could be that just one of the belt plies has a rubber composition according to the present invention while other plies of the tire do not.

The rubber composition of the present invention can be aged under different conditions, such as in water (hot water), in air, steam, nitrogen and so on. Such ageing methods are known to the skilled person in the art.

The present invention further relates to a ply comprising the rubber composition according to the present invention and metal reinforcing wires embedded in said composition. The ply of the present invention is preferably a carcass ply, a belt ply, a ply strip or an overlay ply.

Preferably, the number of wires per ply is of at least 3, preferably at least 5, more preferably from 5 to 15, more preferably from 6 to 10. Preferably, the wires are arranged in parallel.

Preferably, the metal wires are made of steel. More preferably, the metal wires are coated with brass.

The present invention further relates to a pneumatic tire comprising the rubber composition of the present invention.

Preferably, the pneumatic tire, more preferably being a pneumatic truck or passenger tire, further comprises metal reinforcing wires embedded in the rubber composition forming a carcass ply, a belt ply or an overlay ply.

Vulcanization of a pneumatic tire of the present invention is generally carried out at conventional temperatures in the range of from 100°C to 200°C. Preferably, the vulcanization is conducted at temperatures in the range of from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

Such a pneumatic tire is typically comprised of a generally toroidal-shaped carcass with an outer circumferential tread, two spaced beads, and sidewalls extending radially from and connecting said tread to said beads, wherein said tread is adapted to be ground-contacting, and wherein the pneumatic tire is further comprised of a reinforcing ply which is comprised of a plurality of substantially parallel reinforcing metal wires which are embedded in a wire coat rubber composition according to the present invention, wherein the rubber composition comprises a first filler in an amount in the range of from 15 to 70 parts by weight per 100 parts by weight of the rubber, the first filler comprising, preferably being, a carbon-based inorganic compound, wherein the carbon-based inorganic compound comprises interconnected crystalline carbon nanofilaments, and a second filler in an amount in the range of from 5 to 30 phr, the second filler comprising silica, and wherein the ply is preferably a carcass ply, a belt ply, an overlay ply or a ply strip.

The present invention is further illustrated by the following set of embodiments and combinations of embodiments resulting from the dependencies and back-references as indicated. In particular, it is noted that in each instance where a range of embodiments is mentioned, for example in the context of a term such as "The rubber composition of any one of embodiments 1 to 4", every embodiment in this range is meant to be explicitly disclosed for the skilled person, i.e. the wording of this term is to be understood by the skilled person as being synonymous to "The rubber composition of any one of embodiments 1, 2, 3, and 4". Further, it is explicitly noted that the following set of embodiments represents a suitably structured part of the general description directed to preferred aspects of the present invention, and, thus, suitably supports, but does not represent the claims of the present invention.

According to embodiment 1 of the present invention, the rubber composition comprises rubber, a first filler in an amount in the range of from 15 to 70 parts by weight per 100 parts by weight of the rubber, the first filler comprising, preferably being, a carbon-based inorganic compound, wherein the carbon-based inorganic compound comprises interconnected crystalline carbon nanofilaments, and a second filler in an amount in the range of from 5 to 30 phr, the second filler comprising silica.

### Embodiment 2:

The rubber composition of embodiment 1, wherein the first filler has a BET specific surface area in the range of from 20 to 190 m²/g, preferably in the range of from 30 to 110 m²/g, more preferably in the range of from 35 to 80 m²/g, more preferably in the range of from 40 to 60 m²/g, the BET specific surface area being determined according to ASTM D6556.

### Embodiment 3:

The rubber composition of embodiment 1 or 2, wherein the first filler is a carbon-based inorganic compound comprising interconnected crystalline carbon nanofilaments, the carbon-based inorganic compound having a pore volume in the range of from 0.5 to 2.0 cm³/g, preferably in the range of from 0.9 to 1.6 cm³/g, more preferably in the range of from 1.0 to 1.5 cm³/g, more preferably in the range of from 1.1 to 1.4 cm³/g, the pore volume being determined by mercury porosimetry.

### Embodiment 4:

The rubber composition of any one of embodiments 1 to 3, wherein the silica comprised in the second filler comprises, preferably is, an amorphous silica, more preferably precipitated or surface treated silica.

### Embodiment 5:

The rubber composition of any one of embodiments 1 to 4, wherein the silica comprised in the second filler has a BET specific surface area in the range of from 130 to 250 m2/g, preferably in the range of from 135 to 200 m²/g, the BET specific surface area being determined according to ASTM D6556.

### Embodiment 6:

The rubber composition of any one of embodiments 1 to 5, wherein the rubber comprises or preferably is polyisoprene such as cis-1,4-polyisoprene or natural rubber.

### Embodiment 7:

The rubber composition of any one of embodiments 1 to 6, further comprising one or more coupling agents, the one or more coupling agents preferably being selected from the group consisting of carbon black, a silicon-containing compound, an amine-containing compound, and a mixture of two or more thereof, more preferably comprising, more preferably being, a mixture of carbon black and a silicon-containing compound, wherein the silicon-containing compound preferably comprises, more preferably is bis-[3-(triethoxysilylpropyl)]-tetrasulfide.

### Embodiment 8:

The rubber composition of any one of embodiments 1 to 7, further comprising sulfur in an amount in the range of from 5 to 10 phr.

### Embodiment 9:

The rubber composition of any one of embodiments 1 to 8, further comprising one or more oils in a total amount in the range of from 0.5 to 3 phr, the one or more oils preferably being selected from the group consisting of a naphtenic oil, an aromatic oil, a paraffinic oil, a vegetable oil, a low polycyclic aromatic (PCA) oil and a mixture of two or more thereof, more preferably selected from the group consisting of a naphtenic oil, a paraffinic oil and a vegetable oil, the one or more oils more preferably comprising, more preferably being, a naphtenic oil.

### Embodiment 10:

The rubber composition of any one of embodiments 1 to 9, further comprising a processing aid in an amount in the range of from 0.2 to 3 phr, the processing aid being pyrazolone, preferably having a melting point of at least 150°C, more preferably at least 200°C, more preferably in the range of from 200 to 250°C, more preferably in the range of from 210 to 230°C.

### Embodiment 11:

The rubber composition of any one of embodiments 1 to 10, being essentially free of, preferably being free of, a resin; or further comprising one or more resins in a total amount in the range of from 3 to 8 phr.

### Embodiment 12:

The rubber composition of any one of embodiments 1 to 11, further comprising zinc oxide in an amount in the range of from 5 to 15 phr, preferably in the range of from 6.5 to 12 phr.

### Embodiment 13:

The rubber composition of any one of embodiments 1 to 12, further comprising one or more antioxidants in a total amount in the range of from 1 to 3.5 phr, the one or more antioxidants being selected from the group consisting of polymerized trimethyl dihydroquinoline (TMQ), a mixture of aryl-p-phenylene diamines (DTPD AO), and a mixture of two or more thereof, more preferably being polymerized trimethyl dihydroquinoline (TMQ); and/or one or more antidegradants in a total amount in the range of from 0.75 to 3.5 phr, the one or more antidegradant being N-(1,3-dimethylbutyl)-N'-phenyl-p-phenylenediamine (6-PPD).

### Embodiment 14:

The rubber composition of any one of embodiments 1 to 13, further comprising one or more cobalt salts in a total amount in the range of from 0.1 to 3 phr, preferably in the range of from 0.25 to 1 phr, the one or more cobalt salts preferably being selected from the group consisting of cobalt stearate, cobalt neodecanoate, cobalt boro-neodecanoate and a mixture of two or more thereof, more preferably cobalt stearate.

### Embodiment 15:

The rubber composition of any one of embodiments 1 to 14, further comprising one or more fatty acids in a total amount in the range of from 0.1 to 2 phr, the one or more fatty acids preferably being selected from the group consisting of stearic acid, palmitic acid, oleic acid, linoleic acid and a mixture of two or more thereof, more preferably being selected from the group consisting of stearic acid, palmitic acid, oleic acid and a mixture of two or more thereof, the one or more fatty acids more preferably comprising, more preferably being, stearic acid or a mixture of stearic acid, palmitic acid, and oleic acid.

### Embodiment 16:

The rubber composition of any one of embodiments 1 to 15, being a wire coat rubber composition.

### Embodiment 17:

The rubber composition of any one of embodiments 1 to 16, exhibiting a wire adhesion in the range of from 300 to 900 N, preferably in the range of from 350 to 750 N, the wire adhesion being determined according to ASTM D2229-73.

### Embodiment 18:

The rubber composition of any one of embodiments 1 to 17, exhibiting a rebound at 23°C in the range of from 60 to 110%, determined according to ASTM D1054, and a tan delta (10%) at 100°C in the range of from 0.03 to 0.08 determined according to according to ASTM D5289.

### Embodiment 19:

A pneumatic tire comprising the rubber composition of any one of embodiments 1 to 18.

### Embodiment 20:

The pneumatic tire of embodiment 19, being a pneumatic truck or passenger tire, further comprising metal reinforcing wires embedded in the rubber composition forming a carcass ply, a belt ply, a ply strip or an overlay ply.

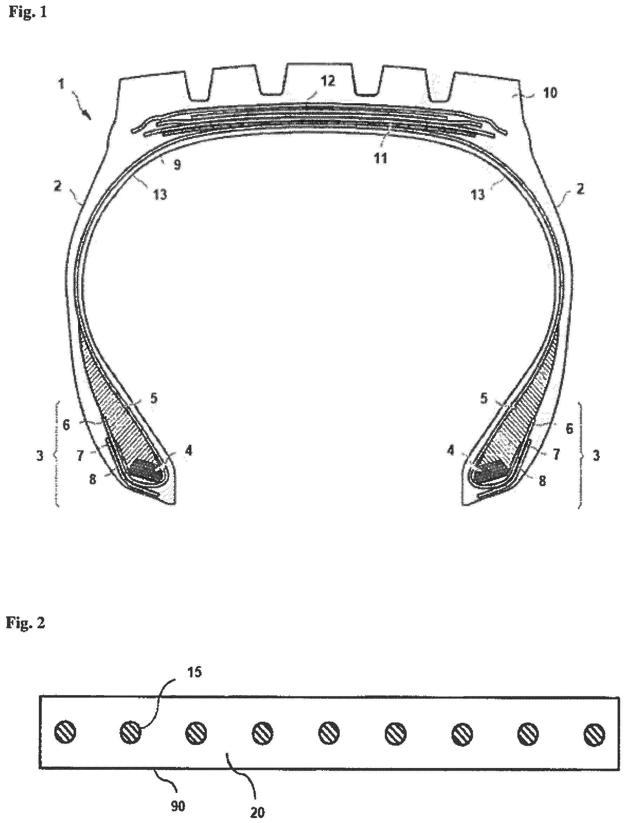

FIG. 1 is a schematic cross-section of a tire 1 according to a preferred embodiment of the present invention. The tire 1 has a tread 10, an inner liner 13, a belt structure comprising four belt plies 11, a carcass ply 9, two sidewalls 2, and two bead regions 3 comprising bead filler apexes 5 and beads 4. The example tire 1 is suitable, for example, for mounting on a rim of a vehicle, e.g., a truck or a passenger car. As shown in FIG. 1, the belt plies 11 may be covered by an overlay ply 12. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. One or more of the carcass ply 9, belt plies 11 and overlay ply 12 comprise a rubber composition in accordance with the invention and may have a plurality of substantially parallel reinforcing members made of metal wire and/or textile cords, preferably metal wire. The turned-up portions 6 of the carcass ply 9 may engage the axial outer surfaces of two flippers 8 and axial inner surfaces of two chippers 7. As shown in FIG. 1, the tread 10 has four circumferential grooves, each groove essentially defining a U-shaped opening in the tread 10. The main portion of the tread 10 may be formed of one or more tread compounds, which may be any suitable tread compound or compounds known in the art. A pneumatic tire according to the present invention could also have for instance more or less than four grooves.

While the tire of FIG. 1 suggests a plurality of tire components including for instance apexes 5, chippers 7, flippers 8 and overlay ply 12, such components are not mandatory for the tires according to the present invention. These are however preferred components. Also, the turned-up end of the carcass ply 9 is not necessary for the tires according to the present invention. If present, it may alternatively pass on the opposite side of the bead area 3 and end on the axially inner side of the bead 4 instead of the axially outer side of the bead 4 as represented in FIG.1.

The schematic cross-section of FIG. 2 shows a ply, which can be a carcass ply, a belt ply, a ply strip, or overlay ply 90 which comprises a plurality of metal wires 15 reinforcing the rubber composition 20 according to the present invention. Typically, such a ply is made in a wire calendar in which a plurality of essentially parallel metal wires is coated from both sides with a layer or sheet of rubber composition 20. Such methods are well known to the person skilled in the art of tire building. After curing, the wires 15 are embedded in the rubber composition 20, reinforcing the same.

Metal wires 15 may be coated with brass for better adhesion properties with regards to contact of the wires 15 to the cured rubber composition 20. The wires 15 may also be dipped in dipping solutions or emulsions for better adhesion properties as known in the art. Neither a dip nor a metal coating is shown in FIG. 2. For the sake of better adhesion of the rubber composition 20 to the metal wires 15, the rubber composition 20 according to the present invention preferably further comprises cobalt salt as defined in the foregoing. Moreover, the rubber composition 20 according to the present invention preferably further comprises zinc oxide which may also improve the adhesion between the metal wire 15 and the cured rubber composition 20 as defined in the foregoing.

### Examples

The wire coat rubber compositions of examples 1 and 2 according to the present invention are shown in Table 1 below together with the wire coat rubber composition of comparative example 1 not according to the present invention. Said wire coat rubber compositions are used in truck tires. The compositions of examples 1 and 2 include the same components as the composition of comparative example 1, except that carbon black (ASTM N347) having a BET specific surface area of about 83 m²/g present in comparative example 1 has been replaced by a porous carbon-based inorganic compound comprising interconnected crystalline carbon nanofilaments with a BET specific surface area of 52.1 m²/g (CarbonX^{®} X5) in examples 1 and 2. Furthermore, example 2 compared to example 1 further comprises a processing aid (3-methyl-5-pyrazolone).

**TABLE 1**

| **Components** | **Comparative Example 1** | **Inventive Example 1** | **Inventive Example 2** |
|---|---|---|---|
| **Natural rubber** | 100 | 100 | 100 |
| **Carbon black (ASTM N347)** | 45 | 0 | 0 |
| **Carbon X^{®1}** | 0 | 45 | 45 |
| **Naphtenic oil** | 1.4 | 1.4 | 1.4 |
| **Zinc oxide** | 8 | 8 | 8 |
| **Antioxidant 1^{2A}** | 1 | 0 | 0 |
| **Antioxidant 2^{2B}** | 1.5 | 2.5 | 1.5 |
| **Antidegradants³** | 2 | 2 | 2 |
| **Stearic acid** | 2 | 0.75 | 0.75 |
| **Conventional silica^{4A}** | 14.5 | 0 | 0 |
| **Highly dispersible silica^{4B}** | 0 | 15 | 15 |
| **Coupling agent⁵** | 2 | 2 | 2 |
| **Processing aid⁶** | 0 | 0 | 1 |
| **Cobalt stearate** | 0.5 | 0.5 | 0.5 |
| **Sulfur (insoluble)** | 7.8 | 7.8 | 7.8 |
| **Accelerator⁷** | 0.8 | 0.8 | 0.8 |

| | | | |
|---|---|---|---|
| ¹Carbon X^{®} X5, Porous carbon-based inorganic compound made of interconnected carbon nanofilaments with a BET specific surface area of 52.1 m²/g, a pore volume of 1.34 cm³/g and a density of 0.46 g/cm. ^{2A}DTPD AO, N,N'-ditolyl-p-phenylene diamine (mixture). ^{2B}TMQ. ³6-PPD. ^{4A} Zeosil^{®} 125GR, BET specific surface area of 125 m²/g (Solvay). ^{4B} Zeosil^{®} 1165MP, BET specific surface area of 160 m²/g (Solvay). ⁵Blend carbon black/Si-69, in particular bis (triethoxysilylpropyl) polysulfide with carbon black such as X-50-S^{®} from Evonik. ⁶3-methyl-5-pyrazolone (melting point 222°C). ⁷Sulfur cure accelerator: N- tert-butyl-benzothiazole sulfonamide (TBBS). | | | |

Mechanical tests have been performed on the wire coat rubber compositions of comparative example 1 and examples 1-2 and are disclosed in Table 2A below. Further, wires have been embedded in the wire coat rubber compositions of comparative example 1 and examples 1-2 obtaining further components to be tested and SWAT test (wire adhesion) has been performed as disclosed in Table 2B below on said obtained components (rubber composition + wires).

**TABLE 2A**

| **Test/Property** | **Units** | **Comparative Example 1** | **Inventive Example 1** | **Inventive Example 2** |
|---|---|---|---|---|
| **RPA2000^{a}** | | | | |
| **Green G'^{a}** | MPa | 0.16 | 0.21 | 0.18 |
| **G' (1%)^{a}** | MPa | 3.05 | 2.31 | 2.29 |
| **G' (10%)^{a}** | MPa | 2.01 | 1.64 | 1.58 |
| **G' (50%)^{a}** | MPa | 1.37 | 1.21 | 1.14 |
| **Tan delta (1%)^{a}** (lower is better) | | 0.1 | 0.072 | 0.084 |
| **Tan delta (10%)^{a}** (lower is better) | | 0.085 | 0.073 | 0.079 |
| **Tan delta (50%)^{a}** (lower is better) | | 0.091 | 0.058 | 0.064 |
| | | | | |
| **Elongation at break^{b}** | % | 402 | 468 | 499 |
| **Modulus (100%)^{b}** | MPa | 3.8 | 2.9 | 2.7 |
| **Modulus (300%)^{b}** | MPa | 15.7 | 13.3 | 11.8 |
| **Mod ratio^{b}** | MPa | 4.1 | 4.6 | 4.4 |
| **Tensile strength^{b}** (higher is better) | MPa | 19.6 | 20.3 | 19.7 |
| **Rebound^{c} (23°C)** (higher is better) | % | 48.2 | 56.4 | 55.1 |
| **Shore A hardness^{d}** | | 70.7 | 67.1 | 63.3 |
| | | | | |
| **Tear Strength^{e1}** | N/mm | 17 | 16.4 | 32.9 |
| **Tear Strength^{e2}** | N/mm | 8.2 | 12.2 | 15.4 |
| **Rebound^{f} (100°C)** (higher is better) | % | 67.7 | 73.4 | 71.5 |

| | | | | |
|---|---|---|---|---|
| ^{a}Data obtained with an RPA 2000 TM Rubber Process Analyzer of Alpha Technologies based on ASTM D5289 - Test at 100°C/ DYN strain = 15%/ Frequency = 0.83 Hz). ^{b}Ringsample test based on ASTM D412 and DIN 53504, percentages are percentages of elongation, respectively strain; tensile strength is stress at break; elongation is elongation at break in% - Test at 23°C after curing for 32 min at 150°C. ^{c}Rebound measured on a Zwick Roell^{™} 5109 rebound resilience tester according to DIN 53512/ASTM D1054 - Test at 23°C after curing for 32 min at 150°C. ^{d}Shore A hardness measured according to ASTM D2240 or equivalent - Test at 23°C after curing for 32 min at 150°C. ^{e1}Strebler tear strength test according to DIN 53539 - Test at 100°C after curing 32 min at 150°C (adhesion to itself). ^{e2}Strebler tear strength test according to DIN 53539 - Test at 100°C after curing 32 min at 150°C and ageing for 7 days at 70°C in air (adhesion to itself). ^{f}Rebound measured on a Zwick Roell^{™} 5109 rebound resilience tester according to DIN 53512/ASTM D1054 - Test at 100°C after curing 32 min at 150°C. | | | | |

**TABLE 2B**

| **Cardboar (fresh)^{g1} d - SWAT test** | | | | |
|---|---|---|---|---|
| **Coverage** | % | 80 | 90 | 80 |
| **Wire adhesion** | N | 602.2 | 676.2 | 587.6 |

| **Cardboard - SWAT test (aged)^{g2}** | | | | |
|---|---|---|---|---|
| **Coverage** | % | 30 | 40 | 50 |
| **Wire adhesion** | N | 517.2 | 632.6 | 736.6 |

| | | | | |
|---|---|---|---|---|
| ^{g1}SWAT test (single wire adhesion test), coverage and wire adhesion (pull-out) test according to ASTM D2229-73 - Test at 23°C after curing for 32 min at 150°C - embedment length: 10 mm 1/2" 1" - pulling speed: 12.5 cm/min. ^{g2}SWAT test (single wire adhesion test), coverage and wire adhesion (pull-out) test according to ASTM D2229-73 - Test at 23°C after curing for 32 min at 150°C and ageing for 7-14 days in hot water - embedment length: 10 mm 1/2" 1" - pulling speed: 12.5 cm/min. | | | | |

As may be taken from Table 2, there is clearly an improved hysteresis for the inventive compositions as illustrated by higher rebound value at room temperature and high temperature, namely 23 and 100°C, respectively, and lower tan delta values compared to the comparative example. The green G' is slightly increased for the compositions of inventive examples 1 and 2 compared to the comparative example. The G' values have slightly decreased for said inventive examples, showing then slightly lower stiffness. Further, the Shore A values for the composition of the inventive samples have slightly decreased making compositions slightly less harder than the composition of comparative example 1. The elongation at break is higher for the inventive examples compared to the comparative example which is beneficial for the intended application which is preferably pneumatic tires for trucks. There is also improvement of the tensile strength/tear strength in the compositions of the inventive examples compared to the comparative example. Finally, there is clearly an improvement in coverage of the wires when using the compositions according to the present invention as well as improved pull out force according to the SWAT test under aged conditions while exhibiting comparable pull out force under fresh conditions when compared to the comparative example.

Further, the wire coat rubber compositions of examples 3 and 4 according to the present invention are shown in Table 3 below together with the wire coat rubber composition of comparative example 2 not according to the present invention. Said wire coat rubber compositions are used in truck tires. The compositions of examples 3 and 4 include the same components as the composition of comparative example 2, except that carbon black (ASTM N347) having a BET specific surface area of about 83 m²/g present in comparative example 2 has been replaced by a porous carbon-based inorganic compound comprising interconnected crystalline carbon nanofilaments with a BET specific surface area of 52.1 m²/g (CarbonX^{®} X5) in examples 3 and 4. Further, example 4 compared to example 3 comprises a higher content of Carbon X.

**TABLE 3**

| **Components** | **Comparative Example 2** | **Inventive Example 3** | **Inventive Example 4** |
|---|---|---|---|
| **Natural rubber** | 100 | 100 | 100 |
| **Carbon black (ASTM N347)** | 45 | 0 | 0 |
| **Carbon X^{®1}** | 0 | 45 | 55 |
| **Naphtenic oil** | 1 | 1.4 | 1.4 |
| **Zinc oxide** | 8 | 8 | 8 |
| **Antioxidant 1^{2A}** | 0 | 1 | 1 |
| **Antioxidant 2^{2B}** | 1.25 | 1.25 | 1.25 |
| **Antidegradants³** | 2 | 2 | 2 |
| **Stearic acid** | 2 | 2 | 2 |
| **Conventional silica⁴** | 14.4 | 14.4 | 14.4 |
| **Coupling agent⁵** | 2 | 2 | 2 |
| **Cobalt stearate** | 0.5 | 0.5 | 0.5 |
| **Sulfur (insoluble)** | 7.8 | 7.8 | 7.8 |
| **Accelerator⁶** | 0.8 | 0.8 | 0.8 |

| | | | |
|---|---|---|---|
| ¹Carbon X^{®} X5, Porous carbon-based inorganic compound made of interconnected carbon nanofilaments with a BET specific surface area of 52.1 m²/g, a pore volume of 1.34 cm³/g and a density of 0.46 g/cm. ^{2A}DTPD AO, N,N'-ditolyl-p-phenylene diamine (mixture). ^{2B}TMQ. ³6-PPD. ⁴ Zeosil^{®} 125GR, BET specific surface area of 125 m²/g (Solvay). ⁵Blend carbon black/Si-69, in particular bis (triethoxysilylpropyl) polysulfide with carbon black such as X-50-S^{®} from Evonik. ⁶Sulfur cure accelerator: N- tert-butyl-benzothiazole sulfonamide (TBBS). | | | |

Mechanical tests have been performed on the wire coat rubber compositions of comparative example 2 and examples 3-4 and are disclosed in Table 4 below. For the wire adhesion tests (SWAT test), wires have been embedded in the wire coat rubber compositions of comparative example 2 and examples 3-4 obtaining further components (rubber composition + wires) to be tested, the results are shown in Table 4 below.

**TABLE 4**

| **Test/Property** | **Units** | **Comparative Example 2** | **Inventive Example 3** | **Inventive Example 4** |
|---|---|---|---|---|
| **RPA test at 100°C/ 1Hz** | | | | |
| **G'(1%)^{a}** | MPa | 2.89 | 2.14 | 2.72 |
| **G' (10%)^{a}** | MPa | 2.02 | 1.67 | 1.96 |
| **G' (50%)^{a}** | MPa | 1.41 | 1.27 | 1.41 |
| **Tan delta (10%)^{a}** (lower is better) | | 0.083 | 0.059 | 0.076 |
| | | | | |
| **Tear Strength^{b}** | N/mm | 23.5 | 16.3 | 20.8 |
| | | | | |
| **Wire adhesion^{c}** (higher is better) | N | 535 | 607 | 594 |
| **Aged wire adhesion^{c}** (higher is better) | N | 607 | 689 | 716 |

| **MDR test** | | | | |
|---|---|---|---|---|
| **S' Min.^{d}** | dN·m | 2.25 | 1.75 | 1.95 |
| **S' Max.^{d}** | dN·m | 23.23 | 20.62 | 23.25 |
| **S' Amount^{d}** | dN·m | 20.98 | 18.87 | 21.3 |
| **T25^{d}** | min | 5.02 | 5.02 | 4.86 |
| **T90^{d}** | min | 13.64 | 13.08 | 12.78 |

| **Tensile properties at room temperature (RT)** | | | | |
|---|---|---|---|---|
| **Elongation at break^{e}** | % | 411 | 429 | 395 |
| **Modulus (300%)^{e}** | MPa | 17.1 | 14.5 | 16.4 |
| **Tensile strength^{e}** | MPa | 100 | 90 | 90 |
| **Rebound^{f}** | % | 100 | 107 | 101 |
| **Shore A hardness^{g}** | | 100 | 95 | 105 |

| | | | | |
|---|---|---|---|---|
| ^{a}Data obtained with an RPA 2000 TM Rubber Process Analyzer of Alpha Technologies based on ASTM D5289 (T = 100°C/ Frequency = 1 Hz). ^{b}Strebler tear strength test according to DIN 53539. ^{c1}SWAT test as in Table 2A (fresh). ^{c1}SWAT test as in Table 2A (aged). ^{d}MDR 300 based on ASTM D 5289. ^{e}Ringsample test based on ASTM D412 and DIN 53504, percentages are percentages of elongation, respectively strain; tensile strength is stress at break; elongation is elongation at break in%. ^{f}Rebound measured on a Zwick Roell^{™} 5109 rebound resilience tester according to DIN 53512/ASTM D1054 at 23°C. ^{g}Shore A hardness measured according to ASTM D2240 at 23°C. | | | | |

As may be taken from Table 4, there is clearly an improved hysteresis for the inventive compositions as illustrated by higher rebound value at room temperature, namely 23°C, respectively, and lower tan delta values compared to the comparative example. The G' values have slightly decreased for said inventive examples, showing then slightly lower stiffness. Further, the Shore A values for the composition of example 3 have slightly decreased making a rubber composition slightly less hard than the composition of comparative example 2. However, the Shore A values for inventive example 4 have slightly increased giving then a rubber composition harder than the composition of the comparative example. Further, the wire adhesion of the composition of inventive examples 3 and 4 is improved compared to the comparative example 2 (under fresh and aged conditions) which is beneficial for the intended application which is preferably pneumatic tires.

A further example of a wire coat rubber composition is shown in Table 5 below together with a comparative example of a wire coat rubber composition not according to the present invention. Said wire coat rubber compositions are used in passenger car tires. Both compositions include the same components, except that carbon black (ASTM N234) having a BET specific surface area of about 119 m²/g present in comparative example 3 has been replaced by a porous carbon-based inorganic compound made of interconnected carbon nanofilaments with a BET specific surface area of 52.1 m²/g (CarbonX^{®} X5) in example 5.

**TABLE 5**

| **Components** | **Comparative Example 3** | **Inventive Example 5** |
|---|---|---|
| **Natural rubber** | 100 | 100 |
| **Carbon black (ASTM N234)** | 23 | 0 |
| **Carbon X^{®1}** | 0 | 18 |
| **Zinc oxide** | 10 | 10 |
| **Antioxidant²** | 1.5 | 1.5 |
| **Antidegradants³** | 1 | 1 |
| **Novolac-type phenolic resin** | 1.5 | 1.5 |
| **Surface treated silica⁴** | 23 | 23 |
| **HMMM⁵** | 4.06 | 4.06 |
| **Cobalt stearate** | 0.5 | 0.5 |
| **Sulfur (insoluble)** | 6.9 | 6.9 |
| **Accelerators⁶** | 1.84 | 1.84 |

| | | |
|---|---|---|
| ¹Carbon X^{®} X5, Porous carbon-based inorganic compound made of interconnected carbon nanofilaments with a BET specific surface area of 52.1 m²/g, a pore volume of 1.34 cm³/g and a density of 0.46 g/cm. ²TMQ. ³6-PPD. ⁴such as for example Agilon^{®} 400G-D* from PPG, BET specific surface area of 140 m²/g. ⁵Hexamethoymethylmelamine. ⁶Sulfur cure accelerators: N- tert-butyl-benzothiazole sulfonamide (TBBS) and N,N-Dicyclohexyl -2- benzothiazolesulfonamide (DCBS) with a weight ratio of TBBS:DCBS of 1:1. | | |

Mechanical tests have been performed on the compositions of comparative example 3 and example 5 and are disclosed in Table 6 below. For the wire adhesion test (SWAT test), wires have been embedded in the wire coat rubber compositions of comparative example 3 and example 5 obtaining further components (rubber composition + wires) to be tested, the results are shown in Table 6 below.

**TABLE 6**

| **Test/Property** | **Units** | **Comparative Example 3** | **Inventive Example 5** |
|---|---|---|---|
| **RPA Tes st at 100°C/ 1Hz** | | | |
| **G' (1%)^{a}** | MPa | 2.22 | 1.32 |
| **G' (15%)^{a}** | MPa | 1.49 | 1.09 |
| **G' (50%)^{a}** | MPa | 1.00 | 0.82 |
| **Tan delta (10%)^{a}** | | 0.086 | 0.053 |
| | | | |
| **Tear Strength^{b}** | N/mm | 13.7 | 6.2 |
| **Wire adhesion^{c}** | N | 305 | 350 |

| **MDR test** | | | |
|---|---|---|---|
| **S' Min.^{d}** | dN.m | 2.07 | 1.78 |
| **S' Max.^{d}** | dN.m | 24.2 | 19.8 |
| **S' Amount^{d}** | dN.m | 22.2 | 18.0 |
| **T25^{d}** | min | 5.0 | 4.7 |
| **T90^{d}** | min | 17.0 | 15.4 |

| **Tensile properties at room temperature (RT)** | | | |
|---|---|---|---|
| **Elongation at break^{e}** | % | 291 | 338 |
| **Modulus (200%)^{e}** | MPa | 7.8 | 6.4 |
| **Tensile strength^{e}** | MPa | 12.1 | 12.6 |
| **Rebound^{f} (23°C)** | % | 59.9 | 68.3 |
| **Shore A hardness^{g} (23°C)** | | 66.0 | 60.7 |

| | | | |
|---|---|---|---|
| ^{a}Data obtained with an RPA 2000^{™} Rubber Process Analyzer of Alpha Technologies based on ASTM D5289 (Temp. = 100°C/ Frequency = 1 Hz). ^{b}Strebler tear strength test according to DIN 53539. ^{c}SWAT test (fresh) as in Table 2A. ^{d}MDR 300 based on ASTM D 5289. ^{e}Ringsample test based on ASTM D412 and DIN 53504, percentages are percentages of elongation, respectively strain; tensile strength is stress at break; elongation is elongation at break in%. ^{f}Rebound measured on a Zwick Roell^{™} 5109 rebound resilience tester according to DIN 53512/ASTM D1054 at 23°C. ^{g}Shore A hardness measured according to ASTM D2240. | | | |

As may be taken from Table 6, there is clearly an improved hysteresis for the inventive compositions as illustrated by higher rebound value at room temperature, namely 23°C, and lower tan delta values compared to the comparative example. The G' values have slightly decreased for said inventive examples, showing then slightly lower stiffness. Further, the wire adhesion of the composition of inventive example 5 is greatly improved compared to the comparative example 3. The elongation at break as well as the tensile strength is higher for inventive example 4 compared to the comparative example which is beneficial for the intended application which is preferably pneumatic tires for passenger cars.

In the context of the present invention, it is noted that the BET specific surface area is determined by nitrogen adsorption according to ASTM D6556 or equivalent. The BET specific surface area measurement method is also described, for example, in the Journal of the American Chemical Society, Volume 60.

In the context of the present invention, numerous measurement methods of the different parameters have been defined by ASTM standard, as known by the skilled person. Equivalent methods can also be used for obtaining same results and are encompassed by the present disclosure.

## Claims

1. A rubber composition comprising rubber, a first filler in an amount in the range of from 15 to 70 parts by weight per 100 parts by weight of the rubber, the first filler comprising a carbon-based inorganic compound, wherein the carbon-based inorganic compound comprises interconnected crystalline carbon nanofilaments, and a second filler in an amount in the range of from 5 to 30 phr, the second filler comprising silica.

2. The rubber composition of claim 1, wherein the first filler has a BET specific surface area in the range of from 20 to 190 m²/g.

3. The rubber composition of claim 1 or 2, wherein the first filler is a carbon-based inorganic compound comprising interconnected crystalline carbon nanofilaments, the carbon-based inorganic compound having a pore volume in the range of from 0.5 to 2.0 cm³/g.

4. The rubber composition of at least one of the previous claims, wherein the silica comprised in the second filler is or comprises amorphous silica; and/or wherein the silica in the second filler has a BET specific surface area in the range of from 130 to 250 m²/g.

5. The rubber composition of at least one of the previous claims, wherein the rubber comprises polyisoprene.

6. The rubber composition of at least one of the previous claims, further comprising one or more coupling agents, the one or more coupling agents being selected from the group consisting of a carbon black coupling agent, a silane, a silicon-containing compound, an amine-containing compound, and a mixture of two or more thereof.

7. The rubber composition of at least one of the previous claims, further comprising sulfur in an amount in the range of from 4 to 10 phr and/or further comprising one or more oils in a total amount in the range of from 0.5 to 3 phr.

8. The rubber composition of at least one of the previous claims, further comprising a processing aid in an amount in the range of from 0.2 to 3 phr, the processing aid comprising pyrazolone.

9. The rubber composition of at least one of the previous claims, wherein the rubber composition is free or essentially free of a resin.

10. The rubber composition of at least one of the previous claims 1 to 8, further comprising one or more resins in a total amount in the range of from 3 to 8 phr.

11. The rubber composition of at least one of the previous claims, further comprising:
(i) zinc oxide in an amount in the range of from 5 to 15 phr; and/or
(ii) one or more antioxidants in a total amount in the range of from 1 to 3.5 phr; and/or
(iii) one or more antidegradants in a total amount in the range of from 0.75 to 3.5 phr; and/or
(iv) one or more cobalt salts in a total amount in the range of from 0.1 to 3 phr; and/or
(v) one or more fatty acids in a total amount in the range of from 0.1 to 2 phr.

12. The rubber composition of at least one of the previous claims, wherein the rubber composition is a wire coat rubber composition, said wire coat rubber composition preferably exhibiting a wire adhesion in the range of from 300 to 900 N.

13. The rubber composition of at least one of the previous claims exhibiting a rebound at 23°C in the range of from 60 to 110%, and a tan delta (10 %) at 100°C in the range of from 0.03 to 0.08.

14. A pneumatic tire comprising the rubber composition (20) of at least one of the previous claims, preferably as a wire coat rubber composition.

15. The pneumatic tire of claim 14, the tire (1) being a truck or passenger tire comprising metal reinforcing wires (15) embedded in said rubber composition (20) forming a carcass ply (9), a belt ply (11), a ply strip or an overlay ply (12).
